# DEMANDE DE BREVET EUROPEEN

(11) **EP 2 705 742 A1**
(43) Date de publication de la demande: **12.03.2014**
(21) Numéro de dépôt: 12290295.0
(22) Date de dépôt: 10.09.2012
(51) Int. Cl.: A01D 41/16, A01D 75/20

(54) **Moyen d'asservissement entre un dispositif de coupe et un convoyeur montés ensemble sur un véhicule**

(71) Demandeur: SARL Belair, 35133 Parigne (FR)
(72) Inventeur: Janvier, Etienne, 35133 Parigne (FR)
(74) Mandataire: Hammond, William

(57) **Abrégé**

Moyen d'asservissement entre le dispositif de coupe et un convoyeur montés ensemble sur un véhicule et destinés à la récolte d'herbe.

Il comprend, d'une part, un capteur dispose sur le dispositif de coupe pour déterminer la distance entre celui-ci et la tête du convoyeur, ce dernier étant articulé sur le véhicule, et, d'autre part, des moyens pour maintenir une distance minimale entre le dispositif de coupe et la tête du convoyeur

Application dans le domaine agricole.

## Description

La présente invention concerne un moyen d'asservissement entre un dispositif de coupe et un convoyeur montés ensemble sur un véhicule et destiné à la récolte d'herbe.

En agriculture, l'automatisation de la récolte d'herbe est une nécessité, d'une part, afin de diminuer les coûts de main d'oeuvre, et, d'autre part, pour augmenter le rendement des récoltes. Bien évidemment, les avantages d'une telle automatisation supposent un fonctionnement aussi fiable que possible.

Pour la récolte de l'herbe, on met généralement en oeuvre un dispositif de coupe, un dispositif pour charger l'herbe dans un réceptacle telle qu'une remorque. Depuis plusieurs années sont apparues des machines dites autochargeuses de type automotrice ou tracté.

Dans les deux cas, ces machines montées sur roues comportent, à l'avant, un dispositif de coupe soit à lame, soit à cylindres ou à assiettes, un dispositif pour convoyer l'herbe coupée et un réceptacle pour récolter l'herbe convoyée.

Le dispositif pour convoyer peut être par exemple de type aspirateur, l'herbe coupée étant aspirée dans une goulotte puis rejetée dans le réceptacle, ou de type convoyeur, l'herbe coupée étant prise en charge par un convoyeur par exemple à peignes pour monter l'herbe jusqu'au réceptacle généralement muni d'un fond constitué par un tapis roulant.

Lorsque le dispositif de transport de l'herbe coupée est un convoyeur muni de peignes ou de dents - dans ce cas, la machine de récole est une autochargeuse tractée -, la tête de celui-ci est donc situé à peu de distance du dispositif de coupe : si un accident de terrain entraîne un déplacement vertical du dispositif de coupe, ce dernier risque de venir buter contre ou même vient buter contre la tête du convoyeur et par suite l'endommage.

Aussi, un des buts de la présente invention est-il de fournir un moyen d'asservissement entre le dispositif de coupe et un convoyeur montés ensemble sur un véhicule.

Un autre but de l'invention est de fournir un tel moyen d'asservissement qui peut être adapté sur des machines comportant un dispositif de coupe et un convoyeur actuellement sur le marché.

Ces buts, ainsi que d'autres qui apparaîtront par la suite, sont atteints par un moyen d'asservissement entre le dispositif de coupe et un convoyeur montés ensemble sur un véhicule et destinés à la récolte d'herbe qui est caractérisé, selon la présente invention, par le fait qu'il comprend, d'une part, un capteur disposé sur le dispositif de coupe pour déterminer la distance entre celui-ci et la tête du convoyeur, ce dernier étant articulé sur le véhicule, et, d'autre part, des moyens pour maintenir une distance minimale entre le dispositif de coupe et la tête du convoyeur.

Avantageusement, le capteur détermine la distance entre le dispositif de coupe et la tête du convoyeur, la compare à une distance minimale prédéterminée et commande les moyens pour maintenir cette distance minimale.

De préférence, les moyens pour maintenir une distance minimale entre le dispositif de coupe et le tête du convoyeur sont constitués par deux vérins hydrauliques disposés de part et d'autre de la tête du convoyeur, dont une extrémité coopère avec le dispositif de coupe et l'autre extrémité avec la tête du convoyeur.

La description qui va suivre et qui ne comporte aucun caractère limitatif doit être lue en regard de l'exemple de réalisation ci-dessous.

Le présent exemple de réalisation est relatif à une remorque autochargeuse du genre constituée par une remorque munie à l'avant d'un dispositif de coupe, d'un convoyeur articulé sur le bord avant de la remorque et d'un réceptacle pour recevoir l'herbe coupée.

Selon l'invention, on dispose sur le dispositif de coupe un capteur déterminant la distance entre le dispositif de coupe et la tête du convoyeur, et des moyens pour maintenir une distance minimale entre le dispositif de coupe et la tête du convoyeur. Ces moyens sont, selon le présent exemple de réalisation, deux vérins hydrauliques disposés de part et d'autre du convoyeur : une des extrémités coopère avec le dispositif de coupe et l'autre extrémité avec le convoyeur.

Le capteur comprend une distance minimale prédéterminée et compare de façon continue la distance mesurée à cette distance minimale : si la distance mesurée est inférieure à la distance minimale, le capteur commande un mouvement du vérin pour rétablir cette distance minimale. Ces vérins en faisant descendre ou monter le convoyeur jouent le rôle d'une suspension.

## Revendications

1. Moyen d'asservissement entre le dispositif de coupe et un convoyeur montés ensemble sur un véhicule et destines à la récolte d'herbe, **caractérisé par le fait qu'**il comprend, d'une part, un capteur dispose sur le dispositif de coupe pour déterminer la distance entre celui-ci et la tête du convoyeur, ce dernier étant articulé sur le véhicule, et, d'autre part, des moyens pour maintenir une distance minimale entre le dispositif de coupe et la tête du convoyeur

2. Moyen d'asservissement selon la revendication 1, **caractérisé par le fait que** le capteur détermine la distance entre le dispositif de coupe et la tête du convoyeur, la compare à une distance minimale prédéterminée et commande les moyens pour maintenir cette distance minimale.

3. Moyen d'asservissement selon la revendication 1, **caractérisé par le fait que** les moyens pour maintenir une distance minimale entre le dispositif de coupe et la tête du convoyeur sont constitués par deux vérins hydrauliques disposés de part et d'autre de la tête du convoyeur, dont une extrémité coopère avec le dispositif de coupe et l'autre extrémité avec la tête du convoyeur.
